# EUROPEAN PATENT APPLICATION

(11) **EP 3 273 727 A1**
(43) Date of publication of application: **24.01.2018**
(21) Application number: 16764435.0
(22) Date of filing: 08.03.2016
(51) Int. Cl.: H04W 48/18, H04W 48/16, H04W 72/04, H04W 88/06

(54) **MOBILE COMMUNICATION TERMINAL, COMMUNICATION CONTROL DEVICE, COMMUNICATION CONTROL METHOD, AND NON-TRANSITORY COMPUTER-READABLE MEDIUM**

(30) Priority: 18.03.2015 JP 2015054536
(71) Applicant: NEC Corporation, Tokyo 108-8001 (JP)
(72) Inventor: FUKUI, Keiji, Tokyo 108-8001 (JP); SUZUKI, Naoaki, Tokyo 108-8001 (JP); WATANABE, Kazuo, Tokyo 108-8001 (JP); TAMURA, Toshiyuki, Tokyo 108-8001 (JP)
(74) Representative: MacDougall, Alan John Shaw
(86) International application number: PCT/JP2016/001240
(87) International publication number: WO 2016/147602

(57) **Abstract**

An object is to provide a mobile communication terminal that can perform communication in a frequency band matching a band which is necessary for a communication terminal to perform communication. A mobile communication terminal includes: a communication unit (11) which connects to a mobile communication network (20) by using a first frequency band; a communication unit (12) which connects to the mobile communication network (20) by using a second frequency band; and a determining unit (13) which determines to connect to the mobile communication network (20) by using a service type and using at least one of the communication unit (11) and the communication unit (12) when performing communication via the mobile communication network (20), wherein the service type indicates service executed during the communication via the mobile communication network (20).

## Description

### Technical Field

The present invention relates to a mobile communication terminal, a communication control apparatus, a communication control method and a program. More particularly, the present invention relates to the mobile communication terminal, the communication control apparatus, the communication control method and the program which can use a plurality of frequency bands.

### Background Art

In recent years, mobile telephone terminals supplied in the market have supported a plurality of RATs (Radio Access Technology). Further, each mobile telephone can perform communication by using one RAT of a plurality of RATs. The RATs include, for example, GSM (registered trademark) (Global System for Mobile communications), W-CDMA (Wideband Code Division Multiple Access) and LTE (Long Term Evolution) which are radio access schemes defined by 3GPP (3rd Generation Partnership Project). Further, in addition to the radio access schemes defined by 3GPP, mobile telephone terminals which can perform wireless LAN communication are also increasing.

Generally, each RAT uses a radio wave of a frequency band different from those of other RATs. Hence, a propagation characteristic of the radio wave of each RAT differs from those of other RATs. Further, each RAT uses radio waves of a plurality of frequency bands in some cases. For example, there are also standards which support a 2.4 GHz frequency band and a 5 GHz frequency band for wireless LAN (Local Area Network) communication.

Generally, a mobile telephone terminal performs communication by using a RAT of the latest wireless communication scheme when detecting a plurality of RATs. This is because the RAT of the latest wireless communication scheme can provide the highest speed transmission. Therefore, the mobile telephone terminal selects the RAT of the latest wireless communication scheme to improve service of the mobile communication terminal.

Further, a mobile telephone terminal measures a signal strength of each RAT, and selects a RAT which transmits a signal of the highest reception quality.

Non-Patent Literature 1 discloses an ISR (Idle mode Signaling Reduction) function of defining a flow of incoming call processing when a communication terminal can use communication according to a plurality of RATs. When, for example, a RNC (Radio Network Controller) and an eNB (evolved NodeB) which uses a wireless communication scheme different from that of the RNC perform paging, a communication terminal performs response processing of responding to one paging. Further, a network side also continues subsequent communication by using a wireless communication scheme of the RNC or the eNB to which the communication terminal has responded.

Patent Literature 1 discloses deciding whether or not it is possible to perform handover between different RATs according to whether communication is voice communication or data communication.

### Citation List

### Patent Literature

PTL 1: USP 7,257,403

### Non-Patent Literature

NPL 1: 3GPP TS23.401 V13.1.0 (2014-12) 5.3.4 Service Request procedures

### Summary of Invention

### Technical Problem

When processing disclosed in Non-Patent Literature 1 is executed in an environment where a communication terminal can perform communication by using a plurality of RATs as in Non-Patent Literature 1 and Patent Literature 1, if different RATs are available, the communication terminal performs communication by using one of the RATs. In this case, there are problems that a plurality of communication terminals are likely to perform communication while intensively using the latest RAT and are likely to concentrate on a high frequency band which enables high speed communication. Further, even when whether or not to it is possible to connect to a different RAT is decided by using an information element used during handover for deciding whether communication is voice communication or data communication as in Patent Literature 1, there is the following problem. When whether or not it is possible to connect to the different RAT is decided by using the information element used during handover for deciding whether or not communication is voice communication, a communication terminal is likely to continue using the same frequency band after connecting to the different RAT. Therefore, there is a problem that intensive use of a given frequency band is not reduced, and radio resources cannot be effectively used.

An object of the present invention is to provide a mobile communication terminal, a communication control apparatus, a communication control method, and a program which can use an appropriate frequency band to effectively make use of radio resources.

### Solution to Problem

A mobile communication terminal according to a first aspect of the present invention includes: a first communication unit that connects to a mobile communication network by using a first frequency band; a second communication unit that connects to the mobile communication network by using a second frequency band; and a determining unit that determines to connect to the mobile communication network by using a service type and using at least one of the first communication unit and the second communication unit when performing communication via the mobile communication network, wherein the service type indicates service executed during the communication via the mobile communication network.

A communication control apparatus according to a second aspect of the present invention is a communication control apparatus that is installed in a mobile communication network, and includes: a communication unit that receives information when a mobile communication terminal performs communication via the mobile communication network, wherein the information is transmitted from the mobile communication terminal and relates to a frequency band that can be used by the mobile communication terminal; and a selecting unit that determines a frequency band used by the mobile communication terminal by using a service type, and transmitting information related to the determined frequency band to the mobile communication terminal, wherein the service type indicates service executed when the mobile communication terminal performs the communication via the mobile communication network.

A communication control method according to a third aspect of the present invention includes determining to connect to a mobile communication network by using a service type and using at least one of a first communication unit and a second communication unit when performing communication via the mobile communication network, wherein the service type indicates service executed during the communication via the mobile communication network, the first communication unit connects to the mobile communication network by using a first frequency band, and the second communication unit connects to the mobile communication network by using a second frequency band.

A program according to a fourth aspect of the present invention causes a computer to execute determining to connect to a mobile communication network by using a service type and using at least one of a first communication unit and a second communication unit when performing communication via the mobile communication network, wherein the service type indicates service executed during the communication via the mobile communication network, the first communication unit connects to the mobile communication network by using a first frequency band, and the second communication unit connects to the mobile communication network by using a second frequency band.

### Advantageous Effects of Invention

The present invention can provide a mobile communication terminal, a communication control apparatus, a communication control method and a program which enable communication terminals to perform communication in a frequency band matching a band which is necessary for the communication terminals to perform communication.

### Brief Description of Drawings

Fig. 1 is a configuration diagram of a mobile communication terminal according to a first embodiment.
Fig. 2 is a configuration diagram of a communication system according to a second embodiment.
Fig. 3 is a configuration diagram of a UE according to the second embodiment.
Fig. 4 is a view for explaining service areas of a plurality of RATs which use different frequency bands according to the second embodiment.
Fig. 5 is a view for explaining a relationship between a frequency band and a band which can be secured in this frequency band according to the second embodiment.
Fig. 6 is a configuration diagram of a cell according to the second embodiment.
Fig. 7 is a view illustrating a flow of RAT selection processing according to the second embodiment.
Fig. 8 is a view illustrating a flow of RAT selection processing according to the second embodiment.
Fig. 9 is a configuration diagram of a MME according to a third embodiment.
Fig. 10 is a view illustrating a flow of RAT selection processing according to the third embodiment.
Fig. 11 is a view illustrating a flow of carrier aggregation processing according to a fourth embodiment.
Fig. 12 is a view illustrating a flow of the carrier aggregation processing according to the fourth embodiment.
Fig. 13 is a view illustrating a flow of carrier aggregation processing according to a fifth embodiment.
Fig. 14 is a view illustrating a flow of network connection processing according to a sixth embodiment.
Fig. 15 is a view illustrating a flow of the network connection processing according to the sixth embodiment.
Fig. 16 is a view illustrating a flow of network connection processing according to a seventh embodiment.

### Description of Embodiments

### (First Embodiment)

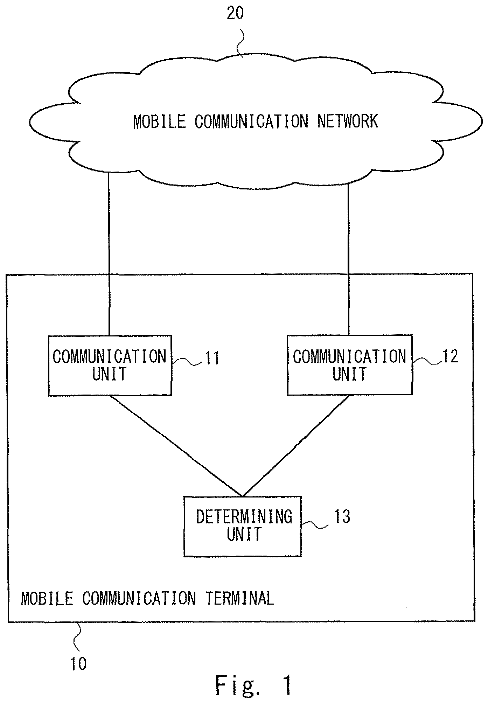

Embodiments of the present invention will be described below with reference to the drawings. A configuration example of a mobile communication terminal 10 according to the first embodiment of the present invention will be described with reference to Fig. 1. The mobile communication terminal 10 may be a mobile telephone terminal, a smartphone or a tablet terminal. Further, the mobile communication terminal 10 may be a computer apparatus which operates when a processor executes programs stored in a memory.

The mobile communication terminal 10 in Fig. 1 includes a communication unit (transmitting/receiving unit) 11, a communication unit (transmitting/receiving unit) 12 and a determining unit 13. The communication unit 11, the communication unit 12 and the determining unit 13 may be software or modules which execute processing when the processor executes programs stored in the memory. Alternatively, the communication unit 11, the communication unit 12 and the determining unit 13 may be configured as circuits.

The communication unit 11 connects to a mobile communication network 20 by using a frequency band A. The frequency band A may be, for example, one frequency band of an 800 MHz band, a 1.5 GHz band, a 2 GHz band and a 5GHz band. The mobile communication network 20 is a network which is managed by a mobile telecommunication carrier. Connection of the communication unit 11 to the mobile communication network 20 means that, for example, the communication unit 11 can communicate with a base station which configures the mobile communication network 20.

The communication unit 12 connects to the mobile communication network 20 by using a frequency band B different from the frequency band A. The frequency band B may be one frequency band of the 800 MHz band, the 1.5 GHz band, the 2 GHz band and the 5 GHz band. When, for example, the frequency band A is the 800 MHz band, the frequency band B is the 2 GHz band.

When the mobile communication terminal 10 performs communication via the mobile communication network 20, the determining unit 13 determines to connect to the mobile communication network 20 by using a service type indicating service executed during communication via the mobile communication network 20, and using at least one of the communication unit 11 and the communication unit 12.

The communication via the mobile communication network 20 may mean that, for example, the mobile communication terminal 10 performs voice communication or data communication with another mobile communication terminal via the mobile communication network 20. The service type is information for identifying service determined according to a type of data transmitted and received from and by the mobile communication terminal 10, and may be, for example, voice communication, Web access, text message communication or moving image distribution.

Generally, as a bandwidth to be used widens, a communication speed increases. Consequently, a high frequency band which makes it possible to secure a wide bandwidth can increase the communication speed compared to a low frequency band which can only secure a narrow bandwidth. Hence, the determining unit 13 may determine to select the communication unit 11 which uses the 800 MHz band when, for example, the service indicated by the service type does not need high speed communication. Further, when the service indicated by the service type needs high speed communication (e.g., in a case of moving image distribution), the determining unit 13 may determine to select the communication unit 12 which uses the 2 GHz band or determine to select both the communication unit 11 and the communication unit 12.

As described above, the mobile communication terminal 10 in Fig. 1 can determine the frequency band to use according to a service executed during communication via the mobile communication network 20. Hence, when, for example, executing a service which does not need high speed communication, the mobile communication terminal 10 can perform control of selecting a communication unit which uses a lower frequency band. Consequently, the mobile communication network 20 can secure appropriate radio resources for the mobile communication terminal 10, and prevent a plurality of mobile communication terminals from intensively using a high frequency band which enables high speed communication.

### (Second Embodiment)

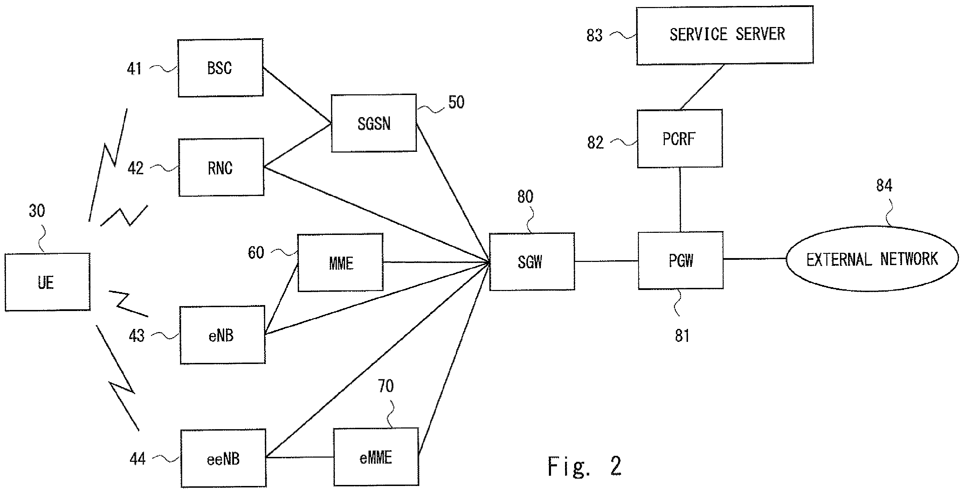

Next, a configuration example of a communication system according to the second embodiment of the present invention will be described with reference to Fig. 2. The communication system in Fig. 2 includes a UE (User Equipment) 30, a BSC (Base Station Controller) 41, a RNC (Radio Network Controller) 42, an eNB (evolved NodeB) 43, an eeNB (enhanced eNB) 44, a SGSN (Serving GPRS Support Node) 50, a MME (Mobility Management Entity) 60, a eMME (evolved MME) 70, a SGW (Serving Gateway) 80, a PGW (Packet Date Network Gateway) 81, a PCRF (Policy and Charging Rules Function) 82, a service server 83 and an external network 84.

The BSC 41, the RNC 42, the eNB 43, the eeNB 44, the SGSN 50, the MME 60, the eMME 70, the SGW 80, the PGW 81 and the PCRF 82 operate as defined by 3GPP and are node apparatuses which configure a mobile communication network. The mobile communication network configured by these components, i.e., the BSC 41, the RNC 42, the eNB 43, the eeNB 44, the SGSN 50, the MME 60, the eMME 70, the SGW 80, the PGW 81 and the PCRF 82 correspond to the mobile communication network 20 in Fig. 1.

The UE 30 is a generic term for a mobile communication terminal according to 3GPP, and corresponds to a mobile communication terminal 10 in Fig. 1. The BSC 41 is an apparatus which performs communication by using a radio access scheme which is called a so-called second generation (2G). The RNC 42 is an apparatus which performs communication by using a radio access scheme which is called a so-called third generation (3G). The eNB 43 is an apparatus which performs communication by using a radio access scheme which is called a so-called fourth generation (4G) or LTE (Long Term Evolution). The eeNB 44 is an apparatus which performs communication by using a radio access scheme which is called a so-called fifth generation (5G). The eeNB 44 is a base station which can perform communication by using a radio access scheme newly defined subsequently to LET.

The SGSN 50 is an apparatus which integrates the BSC 41 and the RNC 42, and relays U (User)-Plane data and C (Control)-Plane data transmitted and received between the BSC 41 and the SGW 80. The U-Plane data may be referred to as user data, for example, and the C-Plane data may be referred to as control data. The MME 60 relays C-Plane data transmitted and received between the eNB 43 and the SGW 80. The eMME 70 relays the C-Plane data transmitted and received between the eeNB 44 and the SGW 80.

The SGW 80 relays the U-Plane data transmitted and received between the RNC 42, the SGSN 50, the eNB 43 and the eeNB 44, and the PGW 81. The PGW 81 is a gateway apparatus connected with the external network 84 different from the mobile communication network 20 configured by the UE 30, the BSC 41, the RNC 42, the eNB 43, the eeNB 44, the SGSN 50, the MME 60, the eMME 70, the SGW 80, the PGW 81 and PCRF 82. The external network 84 may be a mobile communication network which is managed by another mobile telecommunications carrier, may be a network which performs point-to-point communication or may be a network which is managed by an ISP (Internet Service Provider).

The PCRF 82 is an apparatus which manages a communication policy or a charging policy of the mobile communication network 20. The service server 83 is a server managed by the mobile communication network 20 or the external network 84, and provides communication service to the UE 30.

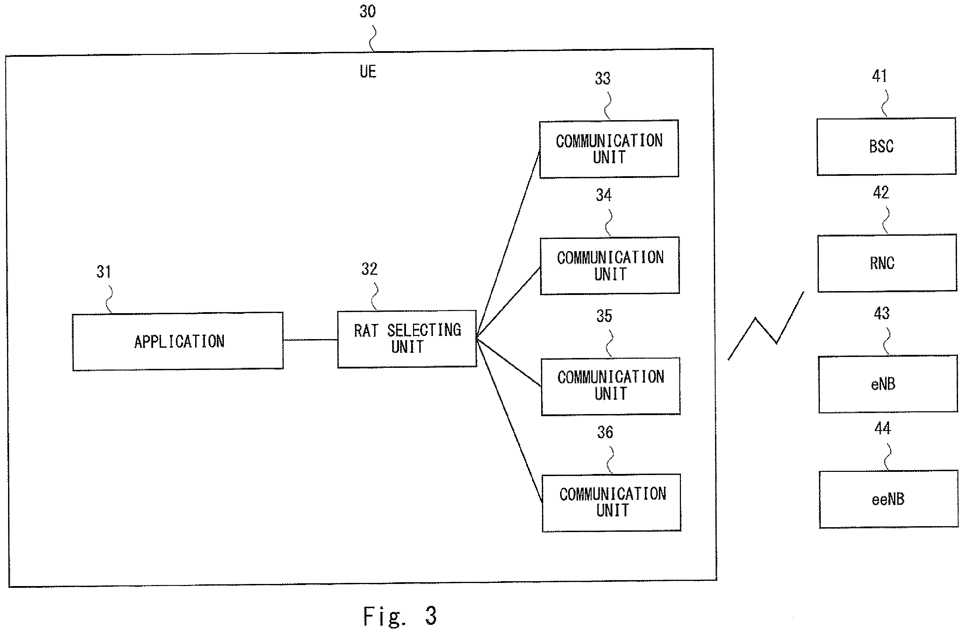

Next, a configuration example of the UE 30 according to the second embodiment of the present invention will be described with reference to Fig. 3. The UE 30 includes an application 31, a RAT selecting unit 32 and communication units 33 to 36. The application 31, the RAT selecting unit 32 and the communication units 33 to 36 may be software or modules which execute processing when a processor executes programs stored in a memory. Alternatively, the RAT selecting unit 32 and the communication units 33 to 36 may be configured as circuits.

The communication units 33 to 36 communicate with other party apparatuses by using different frequency bands. The other party apparatuses may be, for example, the BSC 41, the RNC 42, the eNB 43 and the eeNB 44.

For example, the communication unit 33 may perform wireless communication by using the 800 MHz band. The communication unit 34 may perform wireless communication by using the 1.5 GHz band. The communication unit 35 may perform wireless communication by using the 3 GHz band. The communication unit 36 may perform wireless communication by using the 30 GHz band.

The application 31 may be, for example, an application which performs voice communication, Web access, music playback or moving image playback. The RAT selecting unit 32 receives information related to a service type transmitted from the mobile communication network 20 via the communication unit 33 to the communication unit 36. The RAT selecting unit 32 receives, for example, the information related to the service type as C-Plane data when incoming call processing is performed for the UE 30.

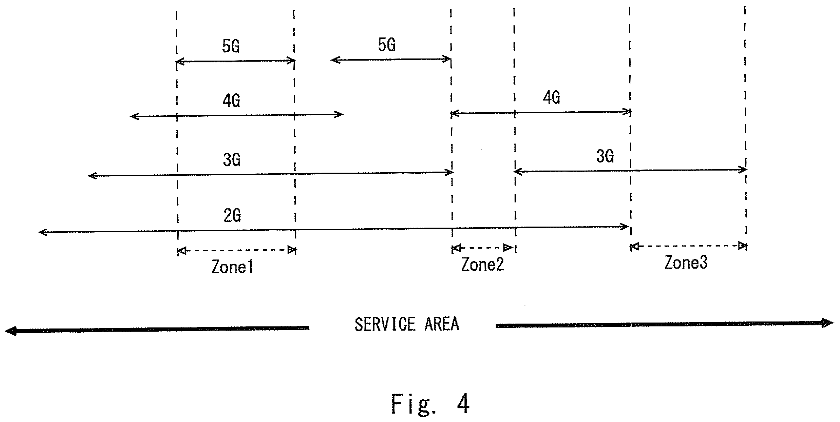

Further, the RAT selecting unit 32 determines a RAT to use and a frequency band according to a service type. Hereinafter, service areas of a plurality of RATs which use different frequency bands will be described with reference to Fig. 4.

In Fig. 4, a horizontal axis indicates service area sizes. Further, 2G is a communication area which is formed by using the BSC 41. 3G is a communication area which is formed by using the RNC 42. 4G is a communication area which is formed by using the eNB 43. 5G is a communication area which is formed by using the eeNB 44.

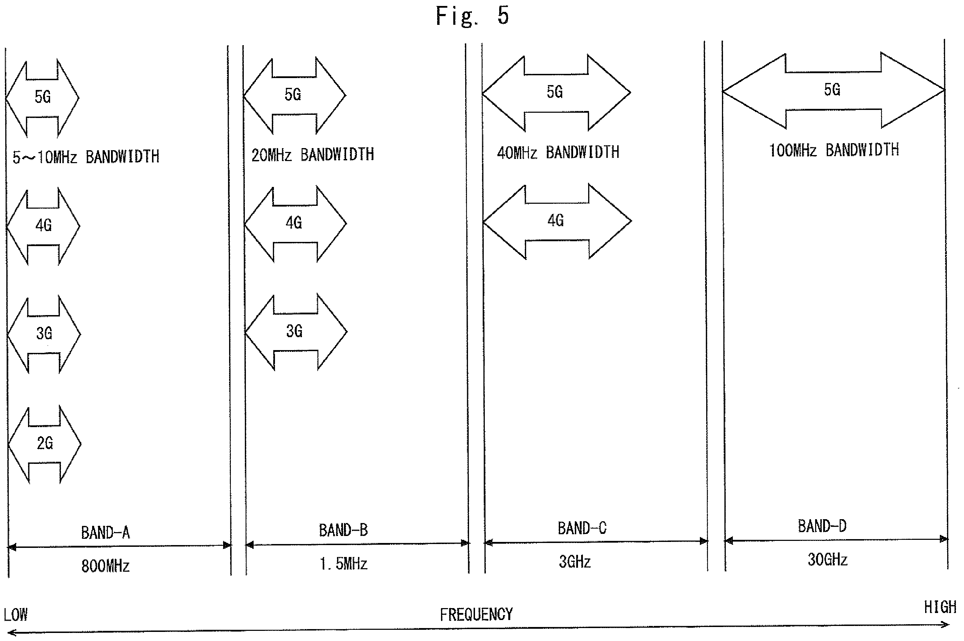

In this regard, a relationship between a frequency band and a band which can be secured in this frequency band will be described with reference to Fig. 5. As illustrated in Fig. 5, a RAT of an older communication scheme or generation uses a lower frequency band and use radio waves of longer wavelengths. Consequently, it is possible to widen a communication area formed by the one BSC 41 or the one RNC 42. However, by lowering the frequency band to use, the band which can be secured narrows, and therefore it is not possible to perform high speed communication.

Meanwhile, a RAT of a newer communication scheme or generation uses a higher frequency band to use, and uses radio waves of shorter wavelengths. Hence, a communication area formed by the one eNB 43 or the one eeNB 44 narrows. However, by raising the frequency band to use, the band which can be secured widens, so that it is possible to perform high speed communication.

For example, a 5 to 10 MHz frequency band may be secured in the 800 MHz band. A 20 MHz frequency band may be secured in the 1.5 GHz band. A 40 MHz frequency band may be secured in the 3 GHz band. A 100 MHz frequency band may be secured in the 30 GHz band.

Further, a RAT of a newer communication scheme or generation is not prevented from using a lower frequency band, and a RAT of an older communication scheme or generation is not prevented from using a high frequency band. In other words, a plurality of RATs can also use one frequency band.

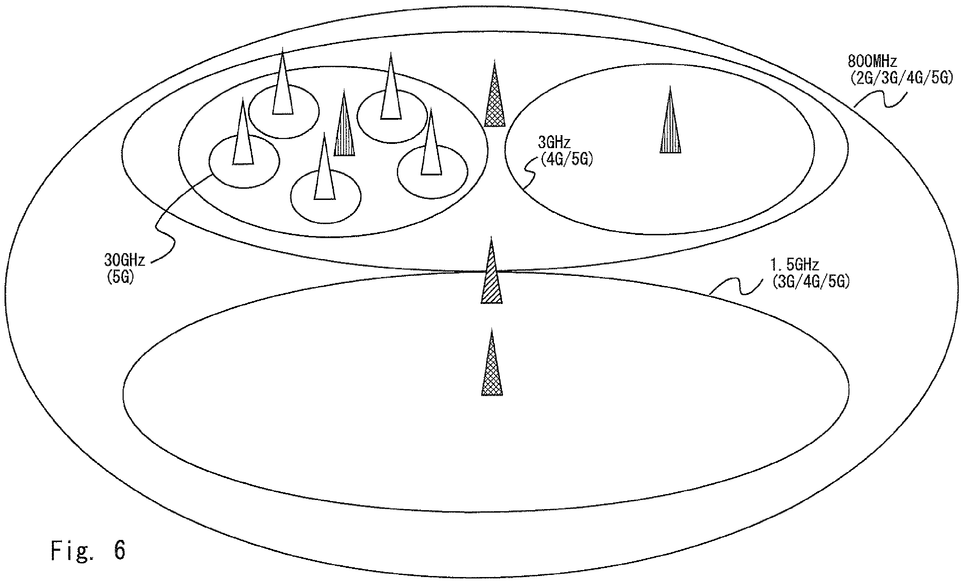

Fig. 6 is a configuration diagram of cells whose communication areas become smaller as frequency bands become higher. Further, Fig. 6 illustrates that RATs of 2G to 5G are available in the 800 MHz band, RATs of 3G to 5G are available in the 1.5 GHz, RATs of 4G and 5G are available in the 3 GHz, and a RAT of 5G is available in the 30 GHz band.

Back to Fig. 4, a Zone 1 included in a service area on the horizontal axis in Fig. 4 enables communication by using RATs related to 2G, 3G, 4G and 5G. Zones indicate specific areas included in the service area. A Zone 2 enables communication by using RATs related to 2G and 4G. A Zone 3 enables communication by using a RAT related to 3G. Further, as is clear from Fig. 4, service areas narrow in order of 2G, 3G, 4G and 5G.

Back to Fig. 3, selection processing of the RAT selecting unit 32 will be described. A case where the UE 30 locates in the Zone 1 will be described. First, a case where the RAT selecting unit 32 receives a service type indicating voice communication will be described. For the voice communication, a narrow band which can realize a communication speed of approximately 20 kbps to 100 kbps may be used. Hence, the RAT selecting unit 32 may select a RAT which uses a low frequency band when the service type indicates the voice communication. A wavelength of a radio wave in a low frequency band is long and, even when there is an obstacle such as a building, and when a radio wave of a long wavelength can go around the building, the radio wave easily keeps connection and hardly disconnects communication even during movement. The voice communication needs real time data communication, and therefore it is preferable to use a low frequency band. When, for example, receiving the service type indicating the voice communication, the RAT selecting unit 32 may select 2G or 3G which uses a low frequency as a RAT. Further, when the RATs of 4G and 5G are available in a plurality of frequency bands, the RAT selecting unit 32 may select the lowest frequency band of a plurality of frequency bands in which RATs of 4G and 5G are available.

Next, a case where the RAT selecting unit 32 receives a service type indicating moving image distribution will be described. For the moving image distribution, it is generally necessary to perform high speed communication which uses a wider band as image resolution becomes higher. Hence, when the service type indicates the moving image distribution, the RAT selecting unit 32 may select a RAT which uses a high frequency band. When, for example, receiving the service type indicating the moving image distribution, the RAT selecting unit 32 may select 4G or 5G which uses a high frequency band as a RAT. Further, when the RAT of 5G is available in a plurality of frequency bands, the RAT selecting unit 32 may select the highest frequency band of a plurality of frequency bands in which the RAT of 5G is available.

The RAT selecting unit 32 connects to the mobile communication network 20 via one communication unit of the communication units 33 to 36 according to a frequency band used by the selected RAT. Alternatively, the RAT selecting unit 32 may select two or more communication units from the communication units 33 to 36, and connect to the mobile communication network 20 via the two or more communication units.

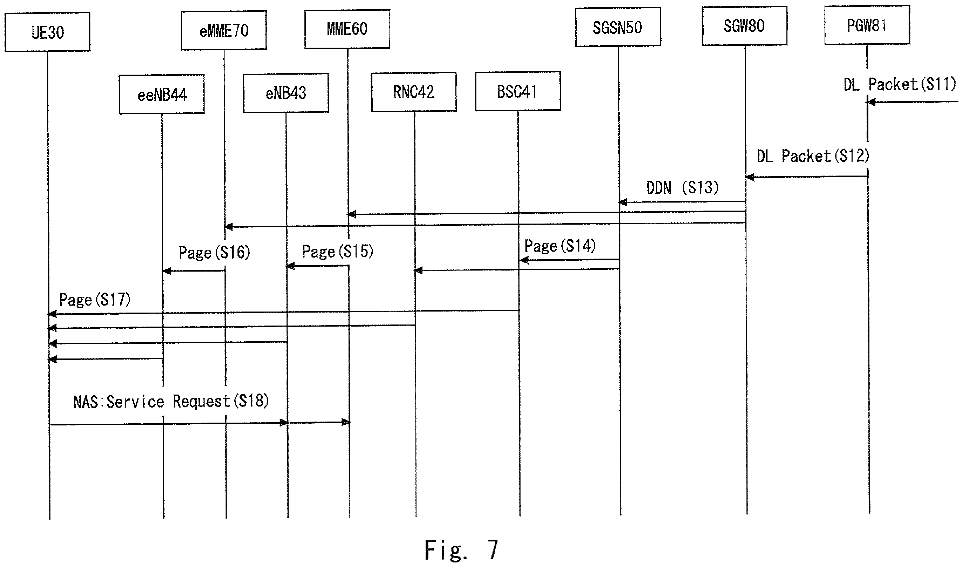

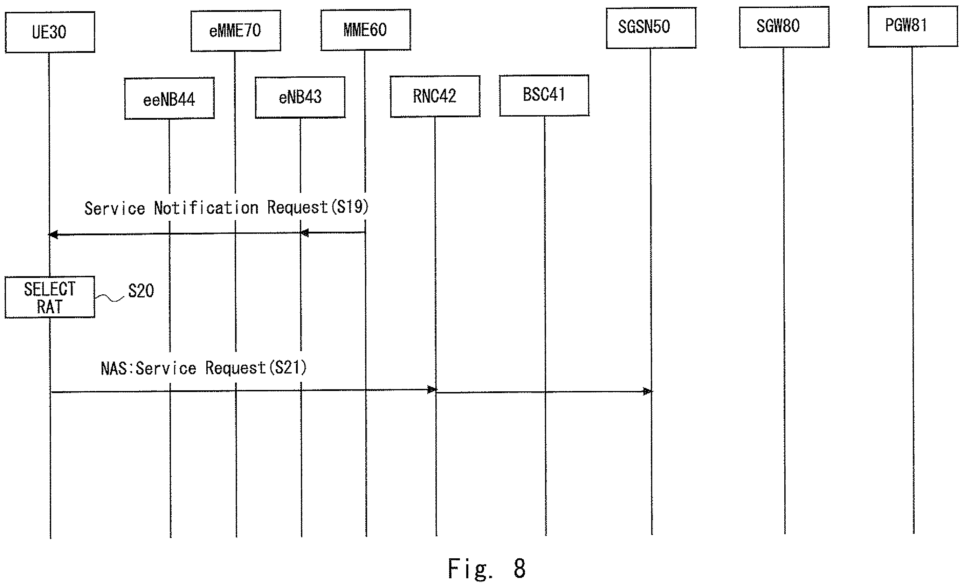

Next, a flow of RAT selection processing according to the second embodiment of the present invention will be described with reference to Figs. 7 and 8. Figs. 7 and 8 illustrate a flow of processing when the UE 30 receives an incoming call.

First, the PGW 81 receives a download packet (DL Packet) addressed to the UE 30 (S11). Next, the PGW 81 transmits the received download packet to the SGW 80 (S12). The PGW 81 transmits to the SGW 80 the download packet via a GTP (General packet radio service Tunneling Protocol)-U tunnel set between the PGW 81 and the SGW 80. The PGW 81 transmits the download packet and information related to a service type indicating service executed by the UE 30, to the SGW 80 in step S12.

For example, the PGW 81 may decide the service type of the download packet by executing DPI (Deep Packet Inspection) with respect to the download packet received in step S11. The DPI means that, for example, the PGW 81 analyzes contents of the download packet received in step S11. The PGW 81 can decide which data related to which service the download packet is by executing the DPI.

Alternatively, PGW 81 may decide a service type indicating service executed by the incoming call destination UE 30 by using the C-Plane data transmitted from the PCRF 82. When, for example, VoIP (Voice over IP) service for performing call control in an IMS (IP Multimedia Subsystem) is executed, the PGW 81 receives C-Plane data indicating that the UE 30 executes the VoIP, from the IMS via the PCRF 82. Thus, the PGW 81 may decide the service type as voice communication by receiving the C-Plane data transmitted from the IMS.

Next, the SGW 80 transmits a DDN (Downlink Data Notification) message to the SGSN 50, the MME 60 and the eMME 70 to notify the UE 30 of the incoming call (S13). The SGW 80 transmits a DDN message to which the service type has been set, to the SGSN 50, the MME 60 and the eMMB 70 in which subscriber information of the UE 30 is registered.

When, for example, locating in the Zone 1 in Fig. 4, the UE 30 can perform communication by using the RATs of 2G to 5G. Hence, in such a case, the subscriber information related to the UE 30 is assumed to be registered in the SGSN 50, the MME 60 and the eMME 70. Further, when the UE 30 locates in the Zone 2, the UE 30 can perform communication by using the RATs of 2G and 4G. In such a case, the subscriber information related to the UE 30 is assumed to be registered in the SGSN 50 and the MME 60.

For example, the UE 30, the SGSN 50, the MME 60 and the eMME 70 register the subscriber information related to the UE 30 in the SGSN 50, the MME 60 and the eMMB 70 by activating the ISR function.

Next, the SGSN 50 transmits a Page message for instructing paging to the BSC 41 and the RNC 42 (S14). Further, the MME 60 transmits the Page message for instructing paging to the eNB 43 (S15), and the eMME 70 transmits the Page message for instructing paging to the eeNB 44 (S16). The SGSN 50, the MME 60 and the eMME 70 transmit the Page messages.

Next, when receiving the Page message, the BSC 41, the RNC 42, the eNB 43 and the eeNB 44 perform paging processing on the UEs located in communication areas of the BSC 41, the RNC 42, the eNB 43 and the eeNB 44 (S17).

Next, the UE 30 transmits a NAS (Non-Access Stratum): Service Request message as a response message to the paging processing to the SGSN 50, the MME 60 or the eMME 70 via one of the BSC 41, the RNC 42, the eNB 43 and the eeNB 44 (S18). Fig. 7 illustrates an example where the UE 30 transmits the NAS: Service Request message to the MME 60 via the eNB 43. Further, Fig. 7 illustrates that, in step S18, the eNB 43 transmits the received NAS: Service Request message to the MME 60. The NAS: Service Request message is a message transmitted to the MME 60 via a S1 interface set between the eNB 43 and the MME 60. The UE 30 may set information related to migratable RATs and a radio wave situation of each RAT to the NAS: Service Request message. The information related to the migratable RATs is, for example, communicable RAT information.

In step S18, for example, the UE 30 may decide that radio wave propagation environment between the UE 30 and the eNB 43 is the best, and transmit the NAS: Service Request message to the eNB 43. Alternatively, when the BSC 41, the RNC 42, the eNB 43 and the eeNB 44 execute the paging processing, the UE 30 may transmit the NAS: Service Request message to one of the BSC 41, the RNC 42, the eNB 43 and the eeNB 44 which executes the paging processing which the UE 30 recognizes the earliest. The UE 30 may determine one of the BSC 41, the RNC 42, the eNB 43 and the eeNB 44 to which the NAS: Service Request message or a message corresponding to the NAS: Service Request message is transmitted, by using other decision criteria.

In view of Fig. 8, the MME 60 transmits the Service Notification Request message to which the information related to the service type has been set, to the UE 30 via the eNB 43 (S19). Further, the MME 60 may set, to the Service Notification Request message, the information related to the service type, and information indicating a frequency band which is suitable to execute service indicated by the service type or information which relates to a RAT which is suitable to execute the service indicated by the service type.

Next, when receiving the Service Notification Request message, the UE 30 selects a RAT used for communication and a frequency band by using the information related to the service type (S20). In this regard, the UE 30 may select the RAT used for communication by taking into account the information related to the service type, and RAT radio wave environment, service importance or a packet unit price of each RAT.

Next, when selecting the RAT and the frequency, the UE 30 transmits the NAS: Service Request message to the apparatus related to the selected RAT (S21). Fig. 8 illustrates an example where the UE 30 transmits the NAS: Service Request message to the SGSN 50 via the RNC 42. That is, the UE 30 changes a NAS: Service Request message transmission destination from the MME 60 to the SGSN 50 in step S18. That is, the UE 30 causes migration of the RAT used for communication from 4G to 3G.

The UE 30 may set, to the NAS: Service Request message, information related to migratable RATs, information indicating that the RAT has been changed and information related to the number of changes of the RAT.

When, for example, the number of changes of the RAT performed by the UE 30 is smaller than a predetermined number, the SGSN 50, the MME 60 and the eMME 70 may transmit a Service Notification Request message again and encourage the change of the RAT. Alternatively, when the information indicating that the RAT has been changed is set to the NAS: Service Request message, the SGSN 50, the MME 60 and the eMME 70 may determine to execute call control by using the RAT selected by the UE 30 without transmitting the Service Notification Request message to the UE 30. Alternatively, by taking into a congestion situation or an available resource situation of the RAT selected by the UE 30, the SGSN 50, the MME 60 and the eMME 70 may encourage the UE 30 to change the RAT.

In step S21 or a subsequent step, the mobile communication network 20 executes call control to communicate with the UE 30 via the RNC 42.

As described above, by using the communication system according to the second embodiment, the UE 30 can select an appropriate frequency band and RAT according to service executed during an incoming call. Consequently, it is possible to prevent a plurality of UEs from intensively using a new RAT and a frequency band which enables high speed communication.

### (Third Embodiment)

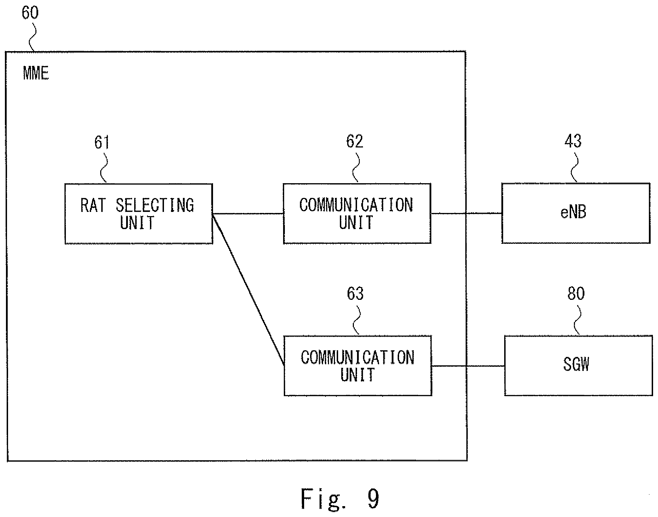

Next, a configuration example of a MME 60 according to the third embodiment of the present invention will be described with reference to Fig. 9. In this regard, a SGSN 50 and an eMME 70 are assumed to employ the same configuration as that of the MME 60 and will not be described in detail.

The MME 60 includes a RAT selecting unit 61, a communication unit 62 and a communication unit 63. The RAT selecting unit 61, the communication unit 62 and the communication unit 63 may be software or modules which execute processing when a processor executes programs stored in a memory. Alternatively, the RAT selecting unit 61, the communication unit 62 and the communication unit 63 may be configured as circuits.

The communication unit 62 communicates with an eNB 43 by using a predetermined protocol of a S1 interface set between the communication unit 62 and the eNB 43. The communication unit 63 communicates with a SGW 80 by using a predetermined protocol of a S11 interface set between the communication unit 63 and the SGW 80.

The RAT selecting unit 61 receives information related to a service type of service executed by a UE 30 when the SGW 80 performs incoming call processing on the UE 30 via the communication unit 63. The RAT selecting unit 61 selects a RAT and a frequency band used by the UE 30 for communication by using the received information related to the service type. The RAT selecting unit 61 transmits the selected RAT and frequency band to the UE 30 via the communication unit 62.

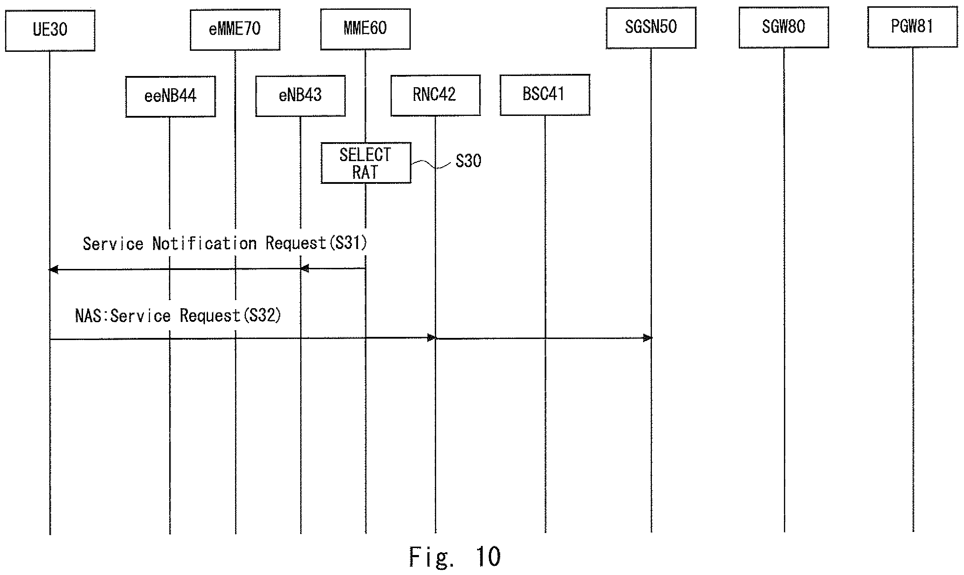

Next, a flow of RAT selection processing according to the third embodiment of the present invention will be described with reference to Fig. 10. In this regard, it is assumed that, before step S30 in Fig. 10 is executed, steps 11 to S18 in Fig. 7 are executed.

The MME 60 receives a NAS: Service Request message transmitted from the UE 30 in step S18 in Fig. 7. Further, information related to migratable RATs and a radio wave situation of each RAT are assumed to be set to the NAS: Service Request message.

Next, the MME 60 determines a RAT and a frequency band which the UE 30 needs to use for communication by using the information received in step S13 in Fig. 7 and related to the service type indicating service executed by the UE 30, and information received in step S18 in Fig. 7 and related to the migratable RATs of the UE 30 (S30). RAT selection processing executed by the RAT selecting unit 61 of the MME 60 is the same as RAT selection processing executed by a RAT selecting unit 32 of the UE 30 in Fig. 3.

Next, the MME 60 transmits the Service Notification Request message to which the RAT and the frequency band which the UE 30 needs to use for communication have been set, to the UE 30 via the eNB 43 (S31). In this case, the UE 30 is assumed to set 3G as a RAT which the UE 30 needs to use for communication, and set 800 MHz as the frequency band.

Next, the UE 30 transmits the NAS: Service Request message to connect to a mobile communication network 20 by using the RAT and the frequency band set to the Service Notification Request message (S32). The UE 30 decides that 3G is set as the RAT which needs to be selected and 800 MHz is set as the frequency band which needs to be selected in the Service Notification Request message in step S31, and therefore transmits the NAS: Service Request message to the SGSN 50 via the RNC 42.

In step S32, the UE 30 changes a NAS: Service Request message transmission destination from the MME 60 in step S18 to the SGSN 50. That is, the UE 30 migrates the RAT which is used for communication from 4G to 3G according to a migration instruction from the MME 60.

Similar to step S21 in Fig. 8, the UE 30 may set, to the NAS: Service Request message, information related to migratable RATs, information indicating that a RAT has been changed, and information related to the number of changes of the RAT.

Further, the MME 60 decides in step S30 that the RAT which the UE 30 needs to use for communication is 4G, and the frequency band used by the UE 30 is also the same as a frequency band used to transmit the NAS: Service Request message in step S18 in Fig. 7. In this case, the MME 60 may execute call control processing related to the UE 30 without performing processing in step S31.

Further, when receiving the NAS: Service Request message in step S32, the SGSN 50 may perform the RAT selection processing again similar to the processing in step S30.

As described above, by using the communication system according to the third embodiment, the MME 60 can select an appropriate frequency band and RAT which the UE 30 needs to use for communication according to service executed by the UE 30 during an incoming call to the UE 30. Consequently, it is possible to prevent a plurality of UEs from intensively using a RAT of a new communication scheme and a frequency band which enables high speed communication.

### (Fourth Embodiment)

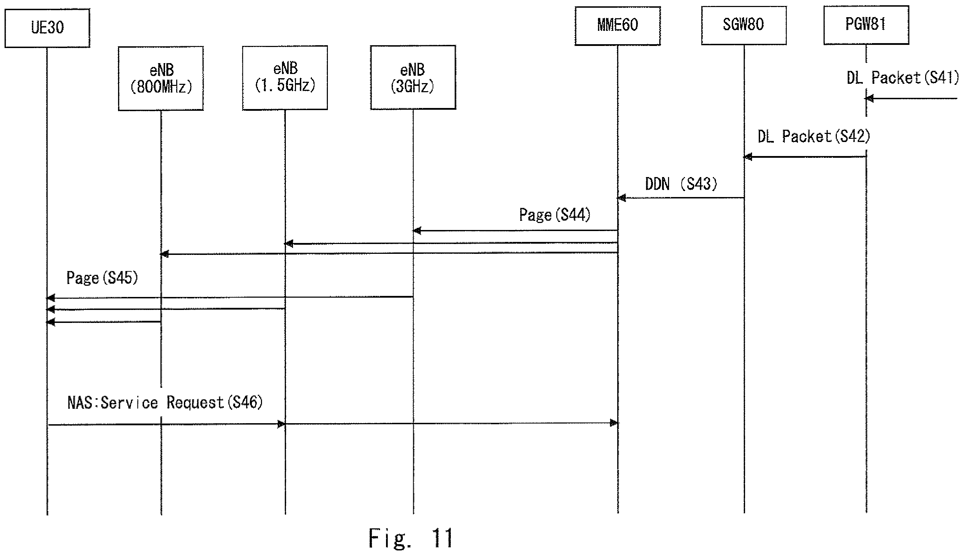

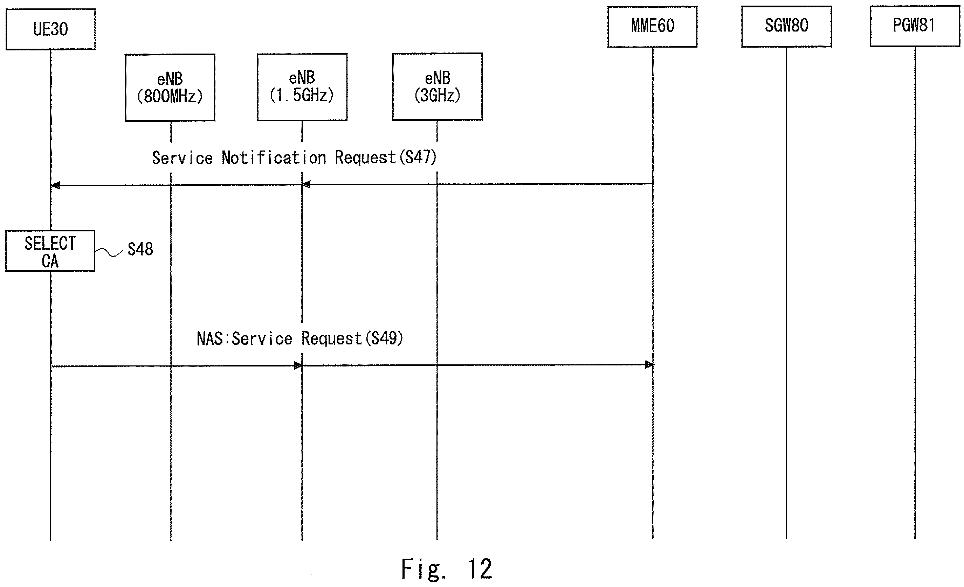

Next, a flow of carrier aggregation processing according to the fourth embodiment of the present invention will be described with reference to Figs. 11 and 12. Steps S41 and S42 are the same as steps S11 and S12 in Fig. 7 and therefore will not be described in detail.

Next, a SGW 80 transmits a DDN message to which a service type has been set, to a MME 60 in which subscriber information of a UE 30 has been registered (S43).

Next, the MME 60 transmits a Page message to an eNB which supports 4G as a RAT and uses an 800 MHz frequency band, an eNB which uses a 1.5 GHz frequency band and an eNB which uses a 3 GHz frequency band (S44). That is, the MME 60 transmits a Page message to a plurality of eNBs which use different frequency bands.

Next, when receiving the Page message, the eNB which uses the 800 MHz frequency band, the eNB which uses the 1.5 GHz frequency band and the eNB which uses the 3 GHz frequency band perform paging processing on UEs located in communication areas of the respective eNBs (S45).

Next, the UE 30 transmits a NAS: Service Request message as a response message to the paging processing in step S45 to the MME 60 via one of the eNB which uses the 800 MHz frequency band, the eNB which uses the 1.5 GHz frequency band and the eNB which uses the 3 GHz frequency band (S46). Fig. 11 illustrates an example where the UE 30 transmits the NAS: Service Request message to the eNB which uses the 1.5 GHz frequency band. The UE 30 may set information related to a radio wave situation of each frequency band and information related to combinations which enable carrier aggregation to the NAS: Service Request message.

In step S46, for example, the UE 30 may decide that radio wave environment between the UE 30 and the eNB which uses the 1.5 GHz frequency band is the best, and transmit the NAS: Service Request message to the eNB which uses the 1.5 GHz frequency band. Alternatively, when the eNB which uses the 800 MHz frequency band, the eNB which uses the 1.5 GHz frequency band and the eNB which uses the 3 GHz frequency band execute paging processing, the UE 30 may transmit the NAS: Service Request message to the eNB which executes the paging processing which the UE 30 has recognized the earliest. The UE 30 may determine one of the eNBs to which the NAS: Service Request message or a message corresponding to the NAS: Service Request message is transmitted, by using other decision criteria.

In view of Fig. 12, the MME 60 transmits the Service Notification Request message to which the information related to the service type has been set, to the UE 30 via the eNB which uses the 1.5 GHz frequency band (S47). Further, when carrier aggregation is performed, the MME 60 may set information, too, which relates to combinations of frequency bands suitable to service indicated by a service type, to the Service Notification Request message.

Next, when receiving the Service Notification Request message, the UE 30 selects frequency bands to combine when performing carrier aggregation by using the information related to the service type (S48). When, for example, the service indicated by the service type is moving image distribution of low resolution, the UE 30 may determine to combine the 800 MHz frequency band including a 5 MHz frequency band and the 1.5 GHz frequency band including a 10 MHz frequency band and perform carrier aggregation. Alternatively, when the service indicated by the service type is moving image distribution of high resolution such as 4K or 8K, the UE 30 may determine to combine a plurality of frequency bands such as 20 MHz × 2 in a 3 GHz frequency band including 20 MHz frequency band and perform carrier aggregation.

In this regard, by taking into account the information related to the service type, radio wave environment of each frequency band, service importance or a packet unit price of each frequency band, the UE 30 may select a combination of frequency bands used for carrier aggregation.

Next, when selecting the frequency bands to combine to perform carrier aggregation, the UE 30 transmits the NAS: Service Request message to the MME 60 via the eNBs which use the selected frequency bands (S49). The UE 30 sets the information related to the selected frequency bands to the NAS: Service Request message.

As described above, by using the communication system according to the fourth embodiment of the present invention, the UE 30 can select a combination of frequency bands which are used for carrier aggregation according to a service type. Consequently, it is possible to select different frequency bands to perform carrier aggregation for service which needs a wide frequency band and service which needs a narrow frequency band. Consequently, it is possible to prevent a plurality of UEs from concentrating on a frequency band which can secure a wide frequency band when carrier aggregation is performed.

### (Fifth Embodiment)

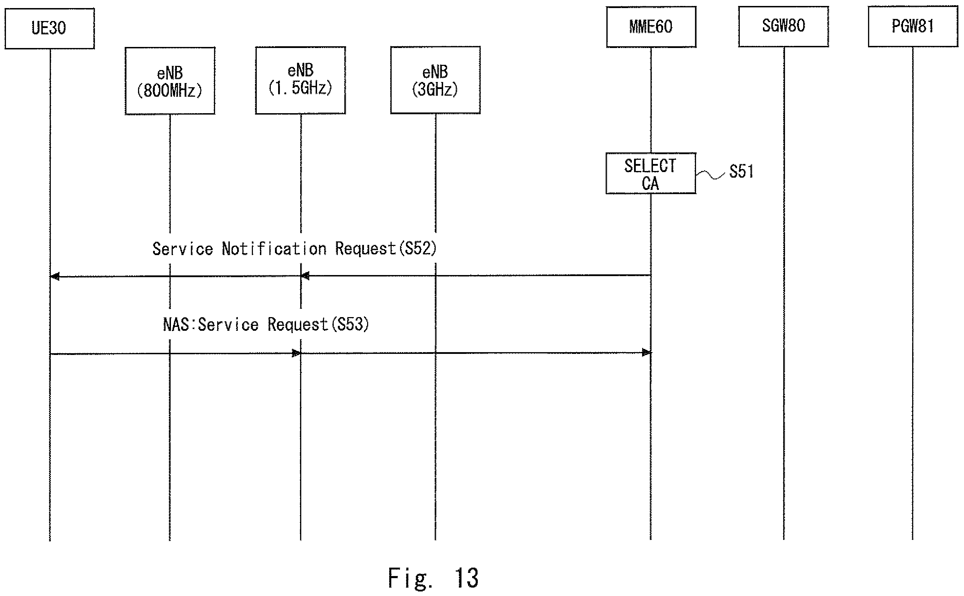

Next, a flow of carrier aggregation processing according to the fifth embodiment of the present invention will be described with reference to Fig. 13. In this regard, it is assumed that, before step S51 in Fig. 13 is executed, steps S41 to S46 in Fig. 11 are executed.

In step S46 in Fig. 11, a MME 60 receives a NAS: Service Request message transmitted from a UE 30. Further, information related to a radio wave situation of each frequency band and information related to combinations which enable carrier aggregation are assumed to be set to the NAS: Service Request message.

Next, the MME 60 determines a combination of frequency bands which the UE 30 needs to use for carrier aggregation by using the information received in step S43 in Fig. 11 and related to a service type indicating service executed by the UE 30, and information received in step S46 in Fig. 11 and related to combinations of frequency bands which enable carrier aggregation of the UE 30 (S51). Processing related to selection of a combination of frequency bands which are used for carrier aggregation executed by the MME 60 is the same as processing executed by the UE 30 in step S48 in Fig. 12.

Next, the MME 60 transmits to the UE 30 a Service Notification Request message to which the information related to the combination of the frequency bands which the UE 30 needs to use for carrier aggregation has been set (S52).

Next, the UE 30 transmits the NAS: Service Request message to the MME 60 via an eNB which uses a frequency band instructed by the MME 60 (S53).

As described above, by using the communication system according to the fifth embodiment of the present invention, the MME 60 can select a combination of frequency bands which are used for carrier aggregation according to a service type. Consequently, it is possible to select different frequency bands to perform carrier aggregation for service which needs a wide frequency band and service which needs a narrow frequency band, for example. Consequently, it is possible to prevent a plurality of UEs from concentrating on a frequency band which can secure a wide frequency band when carrier aggregation is performed.

### (Sixth Embodiment)

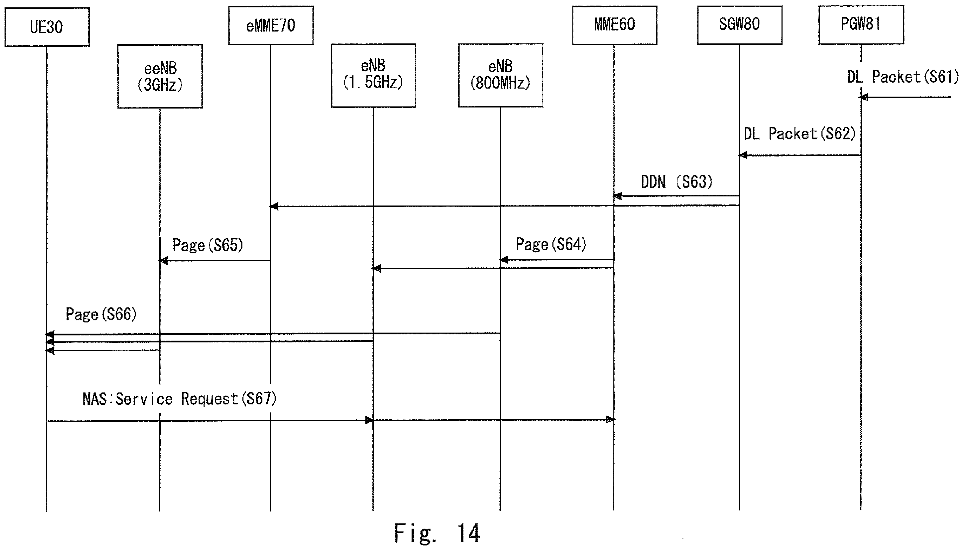

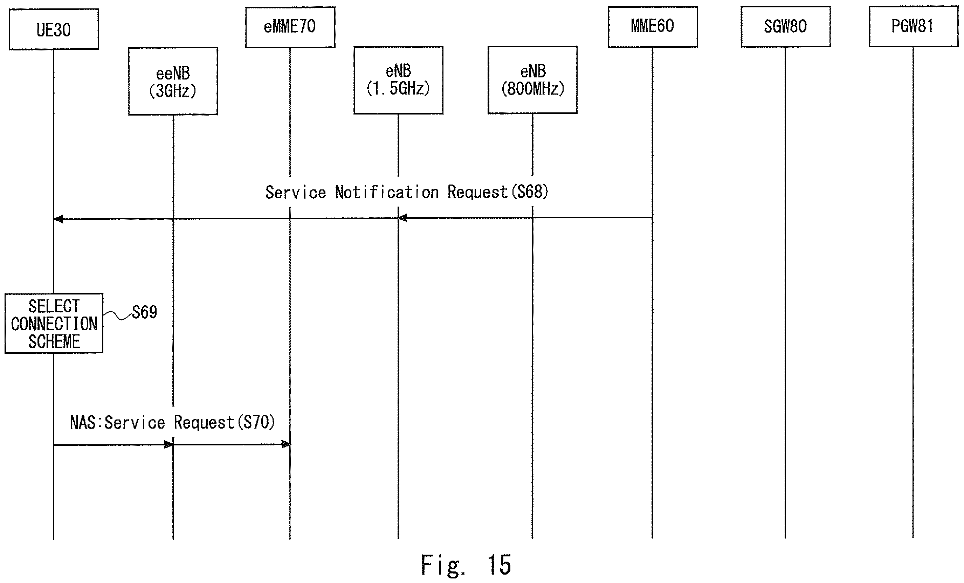

Next, a flow of network connection processing according to the fifth embodiment of the present invention will be described with reference to Figs. 14 and 15. Steps S61 and S62 in Fig. 13 are the same as steps S11 and S12 in Fig. 7, and therefore will not be described in detail.

Next, a SGW 80 transmits a DDN message to which a service type has been set, to a MME 60 and an eMME 70 in which subscriber information of a UE 30 has been registered (S63).

Next, the MME 60 transmits a Page message to an eNB which supports 4G as a RAT and uses an 800 MHz frequency band and an eNB which uses a 1.5 GHz frequency band (S64). That is, the MME 60 transmits a Page message to a plurality of eNBs which use different frequency bands. Further, the eMME 70 transmits the Page message to an eeNB which supports 5G as a RAT and uses a 3 GHz frequency band (S65).

Next, when receiving the Page message, the eNB which uses the 800 MHz frequency band, the eNB which uses the 1.5 GHz frequency band and the eeNB which uses the 3 GHz frequency band perform paging processing on UEs located in communication areas of the eNBs and the eeNB (S66).

Next, the UE 30 transmits a NAS: Service Request message as a response message to the paging processing in step S66 to the MME 60 or the eMME 70 via one of the eNB which uses the 800 MHz frequency band, the eNB which uses the 1.5 GHz frequency band and the eeNB which uses the 3 GHz frequency band (S67). Fig. 11 illustrates an example where the UE 30 transmits the NAS: Service Request message to the eNB which uses the 1.5 GHz frequency band. The UE 30 may set information related to a radio wave situation of each frequency band and information related to combinations which enable carrier aggregation to the NAS: Service Request message.

In step S66, for example, the UE 30 may decide that radio wave environment between the UE 30 and the eNB which uses the 1.5 GHz frequency band is the best, and transmit the NAS: Service Request message to the eNB which uses the 1.5 GHz frequency band. Alternatively, when the eNB which uses the 800 MHz frequency band, the eNB which uses the 1.5 GHz frequency band and the eeNB which uses the 3 GHz frequency band execute paging processing, the UE 30 may transmit the NAS: Service Request message to the one of the eNBs and the eeNB which executes the paging processing which the UE 30 has recognized the earliest. The UE 30 may determine one of the eNBs or the eeNB to which the NAS: Service Request message or a message corresponding to the NAS: Service Request message is transmitted, by using other decision criteria.

In view of Fig. 15, the MME 60 transmits the Service Notification Request message to the UE 30 via the eNB which uses the 1.5 GHz frequency band (S68). The MME 60 sets, to the Service Notification Request message, the information related to the service type indicating service executed by the UE 30, and information about combinations of frequency bands which are suitable to service indicated by the service type when the UE 30 performs carrier aggregation.

Next, when receiving the Service Notification Request message, the UE 30 decides whether or not to perform carrier aggregation or to connect to another RAT which enables high speed communication (S69). In this regard, the UE 30 may perform decision processing in step S69 by using information related to a service type and a movement speed of the UE 30.

When, for example, the service type indicates moving image distribution of high resolution, the UE 30 decides whether to secure a wide band of 40 MHz by communicating with an eeNB which uses a 3 GHz frequency band or to secure a wide band of 20 MHz × 2 by performing carrier aggregation with an eNB which uses a 1.5 GHz frequency band.

In this regard, when moving at a low movement speed or stopping, the UE 30 may decide to secure the wide band of 40 MHz by communicating with the eeNB which uses the 3 GHz frequency band. Alternatively, when moving at a high movement speed, the UE 30 may decide to secure a wide band of 20 MHz × 2 by performing carrier aggregation with the eNB which uses the 1.5 GHz frequency band. When the UE 30 moves at the high movement speed, it is possible to realize communication of stable communication quality by performing carrier aggregation by using a low frequency band which hardly causes disconnection. Further, when the UE 30 stops or moves at the low movement speed, it is possible to realize communication of stable communication quality by using a high frequency band of radio wave straightness.

In step S69, the UE 30 decides to secure the wide band of 40 MHz by communicating with the eeNB which uses the 3 GHz frequency band. Next, the UE 30 transmits a NAS: Service request message to the eMMB 70 via the eeNB which uses the 3 GHz frequency band (S70).

Further, in step S69, the UE 30 may decide to secure the wide band of 20 MHz × 2 by performing carrier aggregation with the eNB which uses the 1.5 GHz frequency band. In other words, in step S69, the UE 30 may determine to perform carrier aggregation and determine a frequency band which is used for carrier aggregation.

As described above, by using the communication system according to the sixth embodiment of the present invention, the UE 30 can determine to perform carrier aggregation or to migrate to another RAT which enables high speed communication according to information related to a service type and a movement speed of the UE 30. Further, the UE 30 can determine a frequency band to use when performing carrier aggregation.

The UE 30 can determine whether to perform carrier aggregation or to secure a wide frequency band by using one RAT according to the movement speed of the UE 30, so that it is possible to perform high speed communication of stable communication quality.

### (Seventh Embodiment)

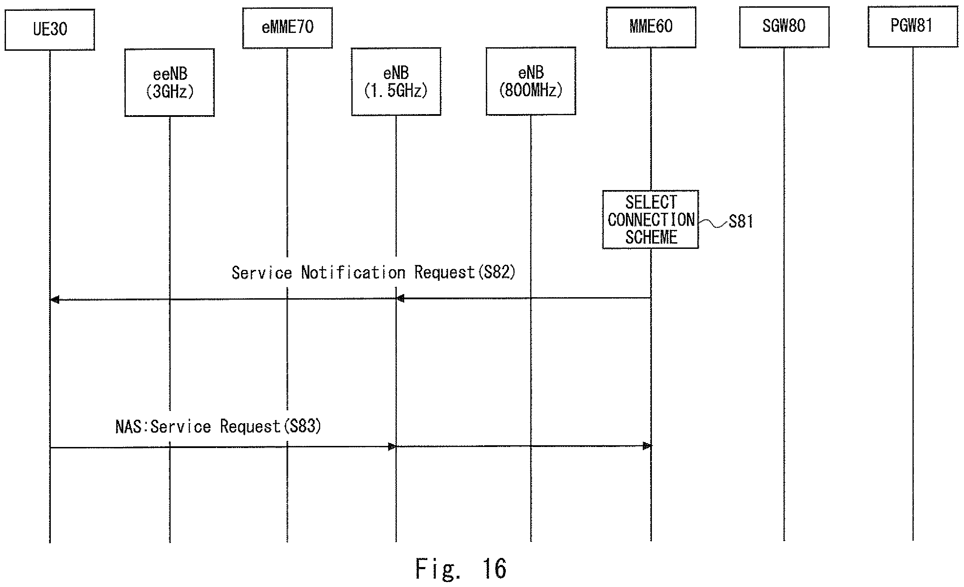

Next, a flow of network connection processing according to the seventh embodiment of the present invention will be described with reference to Fig. 16. In this regard, it is assumed that, before step S81 in Fig. 16 is executed, steps S61 to S67 in Fig. 14 are executed. Further, in step S67 in Fig. 14, a UE 30 may set information related to a movement speed of the UE 30 to a NAS: Service Request message.

In step S67 in Fig. 14, a MME 60 receives the NAS: Service Request message transmitted from the UE 30. Further, information related to a radio wave situation of each frequency band, and information related to combinations which enable carrier aggregation are assumed to be set to the NAS: Service Request message.

Next, the MME 60 decides whether the UE 30 needs to perform carrier aggregation or to connect to another RAT which enables high speed communication by using the information received in step S63 in Fig. 14 and related to a service type for communication of the UE 30, and information received in step S67 in Fig. 14 and related to combinations of frequency bands which enable the UE 30 to perform carrier aggregation (S81). Processing executed by the MME 60 in step S81 is the same as processing executed by the UE 30 in step S69 in Fig. 15.

Next, the MME 60 transmits to the UE 30 the Service Notification Request message to which a decision result in step S81 has been set (S82). In this regard, the MME 60 is assumed to decide that the UE 30 secures a wide band of 20 MHz × 2 by performing carrier aggregation with an eNB which uses the 1.5 GHz frequency band.

Next, the UE 30 transmits the NAS: Service Request message to the MME 60 via an eNB which uses a frequency band instructed by the MME 60 (S83).

As described above, by using the communication system according to the seventh embodiment of the present invention, the MME 60 can determine whether to perform carrier aggregation or to migrate to another RAT which enables high speed communication according to information related to the service type and the movement speed of the MME 60. Further, the UE 30 can determine a frequency band to use when performing carrier aggregation.

The UE 30 can determine whether to perform carrier aggregation or to secure a wide frequency band by using one RAT according to the movement speed of the UE 30, so that it is possible to perform high speed communication of stable communication quality.

The present invention has been described as a hardware configuration in the above embodiments. However, the present invention is not limited to this. The present invention can also be realized by causing a CPU (Central Processing Unit) to execute processing of the UE, the eNB and the MME.

In the above example, the program can be stored by using various types of non-transitory computer readable media, and be supplied to a computer. The non-transitory computer readable media include various types of tangible storage media. The non-transitory computer readable media include, for example, magnetic recording media (e.g., flexible disks, magnetic tapes and hard disk drives), magnetooptical recording media (e.g., optical magnetic disks), CD-ROMs (Read Only Memory), CD-Rs, CD-R/Ws and semiconductor memories (e.g., mask ROMs, PROMs (Programmable ROM), EPROMs (Erasable PROM), flash ROMs and RAMs (Random Access Memory)). Further, the programs may be supplied to the computers by various types of transitory computer readable media. The transitory computer readable media include, for example, electrical signals, optical signals and electromagnetic waves. The transitory computer readable media can supply the programs to the computers via wired communication channels such as electrical cables or optical wires or wireless communication channels.

In addition, the present invention is not limited to the above embodiments, and can be optionally changed without departing from the spirit of the invention.

The present invention has been described above with reference to the embodiments. However, the present invention is not limited to the above. The configurations and the details of the present invention can be variously changed within the scope of the invention as long as one of ordinary skill in the art can understand the changes.

This application claims priority to Japanese Patent Application No. 2015-054536 filed on May 18, 2015, the entire contents of which are incorporated by reference herein.

### Reference Signs List

- 10: MOBILE COMMUNICATION TERMINAL
- 11: COMMUNICATION UNIT
- 12: COMMUNICATION UNIT
- 13: DETERMINING UNIT
- 20: MOBILE COMMUNICATION NETWORK
- 30: UE
- 31: APPLICATION
- 32: RAT SELECTING UNIT
- 33: COMMUNICATION UNIT
- 34: COMMUNICATION UNIT
- 35: COMMUNICATION UNIT
- 36: COMMUNICATION UNIT
- 41: BSC
- 42: RNC
- 43: eNB
- 44: eeNB
- 50: SGSN
- 60: MME
- 61: RAT SELECTING UNIT
- 62: COMMUNICATION UNIT
- 63: COMMUNICATION UNIT
- 70: eMME
- 80: SGW
- 81: PGW
- 82: PCRF
- 83: SERVICE SERVER
- 84: EXTERNAL NETWORK

## Claims

1. A mobile communication terminal comprising:
first communication means for connecting to a mobile communication network by using a first frequency band;
second communication means for connecting to the mobile communication network by using a second frequency band; and
determining means for determining to connect to the mobile communication network by using a service type and using at least one of the first communication unit and the second communication unit when performing communication via the mobile communication network, the service type indicating a service executed during the communication via the mobile communication network.

2. The mobile communication terminal according to according to Claim 1, wherein the determining means further determines a radio access technology to be applied, by using the service type.

3. The mobile communication terminal according to Claim 2, wherein the determining means transmits information via one of the first communication unit and the second communication unit, the information relating to the radio access technology that enables connection to the mobile communication network.

4. The mobile communication terminal according to any one of Claims 1 to 3, wherein the determining means determines a frequency band used for carrier aggregation by using the service type.

5. The mobile communication terminal according to any one of Claims 1 to 4, wherein the determining means receives information via at least one of the first communication unit and the second communication time when the mobile communication terminal receives an incoming call, the information relating to the service type transmitted from the mobile communication network.

6. The mobile communication terminal according to any one of Claims 1 to 5, wherein the determining means determines to connect to the mobile communication network by using at least one of the first communication unit and the second communication unit to use a frequency band by which connection is instructed from the mobile communication network.

7. The mobile communication terminal according to any one of Claims 1 to 6, wherein the determining means determines to connect to the mobile communication network by using one communication unit of the first communication unit and the second communication unit having a lower frequency band to use than that of the other communication unit when the service type indicates voice communication.

8. A communication control apparatus that is installed in a mobile communication network, the communication control apparatus comprising:
communication means for receiving information when a mobile communication terminal performs communication via the mobile communication network, the information being transmitted from the mobile communication terminal and relating to a frequency band that can be used by the mobile communication terminal; and
selecting means for determining a frequency band used by the mobile communication terminal by using a service type, and transmitting information related to the determined frequency band to the mobile communication terminal, the service type indicating a service executed when the mobile communication terminal performs the communication via the mobile communication network.

9. The communication control apparatus according to Claim 8, wherein the selecting means determines a radio access technology to be applied, by using the service type.

10. The communication control apparatus according to Claim 8 or 9, wherein the selecting means further determines a frequency band used for carrier aggregation by using the service type.

11. The communication control apparatus according to any one of Claims 8 to 10, wherein, when the mobile communication terminal receives an incoming call, the selecting means receives a Downlink Date Notification message to which the service type has been set.

12. A communication control method of a mobile communication terminal comprising determining to connect to a mobile communication network by using a service type and using at least one of a first communication unit and a second communication unit when performing communication via the mobile communication network, the service type indicating a service executed during the communication via the mobile communication network, the first communication unit connecting to the mobile communication network by using a first frequency band, and the second communication unit connecting to the mobile communication network by using a second frequency band.

13. A communication control method of a communication control apparatus comprising:
receiving information when a mobile communication terminal performs communication via a mobile communication network, the information being transmitted from the mobile communication terminal and relating to a frequency band that can be used by the mobile communication terminal; and
determining a frequency band used by the mobile communication terminal by using a service type, and transmitting information related to the determined frequency band to the mobile communication terminal, the service type indicating a service executed when the mobile communication terminal performs the communication via the mobile communication network.

14. A non-transitory computer readable medium having a program stored thereon, the program causing a computer to execute determining to connect to a mobile communication network by using a service type and using at least one of a first communication unit and a second communication unit when performing communication via the mobile communication network, the service type indicating a service executed during the communication via the mobile communication network, the first communication unit connecting to the mobile communication network by using a first frequency band, and the second communication unit connecting to the mobile communication network by using a second frequency band.

15. A non-transitory computer readable medium having a program stored thereon, the program causing a computer to execute:
receiving information when a mobile communication terminal performs communication via a mobile communication network, the information being transmitted from the mobile communication terminal and relating to a frequency band that can be used by the mobile communication terminal; and
determining a frequency band used by the mobile communication terminal by using a service type, and transmitting information related to the determined frequency band to the mobile communication terminal, the service type indicating a service executed when the mobile communication terminal performs the communication via the mobile communication network.
